# EUROPÄISCHE PATENTANMELDUNG

(11) **EP 1 207 083 A1**
(43) Veröffentlichungstag der Anmeldung: **22.05.2002**
(21) Anmeldenummer: 01123838.3
(22) Anmeldetag: 05.10.2001
(51) Int. Cl.: B60R 16/02

(54) **Verfahren und Vorrichtung zum Betreiben eines Bordnetzes eines Kraftfahrzeugs**

(30) Priorität: 17.11.2000 DE 10056968
(71) Anmelder: ROBERT BOSCH GMBH, 70442 Stuttgart (DE)
(72) Erfinder: Loehr, Diethard, 73271 Holzmaden (DE); Schoch, Eberhard, 70469 Stuttgart (DE); Schmucker, Clemens, 71732 Tamm (DE); Gottwick, Ulrich, Dr., 70192 Stuttgart (DE)

(57) **Zusammenfassung**

Verfahren zum Betreiben eines elektrischen Teilsystemes, insbesondere ein elektrohydraulisches Bremssystem oder ein elektrisches Lenksystem, einer Motor- bzw. Getriebesteuerung oder einer Antriebsmomentenregelung oder ein Warn-bzw. Anzeigesystem, aufweisenden Bordnetzes eines Kraftfahrzeugs, gekennzeichnet durch folgende Schritte:
- Feststellung des Zustands eines dem Bordnetz zuordnenbaren Energiespeichers, insbesondere einer Batterie
- für den Fall, daß der festgestellte Zustand des Energiespeichers einen voreinstellbaren Grenzwert unterschreitet, Beaufschlagung wenigstens eines Teilsystems mit einem Steuersignal, ansprechend auf welches das wenigstens eine Teilsystem in einen modifizierten Betriebsmodus überführt wird.

## Beschreibung

### Technisches Gebiet

Die vorliegende Erfindung betrifft ein Verfahren und eine Vorrichtung zum Betreiben eines Bordnetzes eines Kraftfahrzeugs nach dem Oberbegriff des Patentanspruchs 1 bzw. des Patentanspruchs 7.

### Stand der Technik

Zur Verbesserung der Verfügbarkeit eines Bordnetzes eines Kraftfahrzeugs ist es möglich, die Größe einer dem Bordnetz zuordnenbaren Batterie sowie eines mit der Batterie zusammenwirkenden Generators dem zu erwartenden elektrischen Bedarf, insbesondere dem elektrischen Spitzenbedarf, anzupassen. Es ist in diesem Zusammenhang zur weiteren Erhöhung der Verfügbarkeit auch bekannt, Zweibatteriensysteme (Starter- und Verbraucherbatterie) vorzusehen.

Derartige Konzepte nehmen in Kauf, daß die in bekannter Technologie produzierten Batterien ein Verbrauchsgut darstellen und im Laufe eines Fahrzeuglebens mehrmals ausgetauscht werden müssen. Es ist in diesem Zusammenhang bekannt, eine Batteriezustandserkennung anzugeben, die signalisiert, wenn die Energiereserve der Batterie unterhalb eine Mindestgröße fällt und die Abgabe einer vorgegebenen bzw. notwendigen elektrischen Leistung kritisch wird bzw. nicht mehr sichergestellt ist. Es ist in diesem Zusammenhang bei nicht mehr voll funktionsfähigen Batterien möglich, Teilsysteme eines Kraftfahrzeug-Bordnetzes bezüglich notwendiger Verfügbarkeit zu priorisieren. So werden beispielsweise zunächst Komfortverbraucher, wie etwa Sitzheizung oder Heckscheibenheizung, anschließend weitere Verbraucher, wie beispielsweise Radio oder Gebläse, zur Sicherstellung wenigstens eines Grundbetriebes des Kraftfahrzeuges abgeschaltet. Als begleitende oder sich hieran anschließende Maßnahmen zur Unterstützung des Batteriezustandes ist es möglich, Reserven der Energieerzeugung, beispielsweise Generatormaßnahmen oder Motordrehzahlmaßnahmen, zu aktivieren.

Die neuesten Entwicklungen auf dem Kraftfahrzeugsektor, beispielsweise elektrohydraulische Bremssysteme (EHB), elektrische Lenksysteme (EAS), elektrische Ventilsteuerungen am Verbrennungmotor, sowie Motor- oder Getriebemanagement, benötigen für den zuverlässigen Betrieb elektrische Energie in ausreichender Menge.

Aus der DE 34 02 374 C2 ist eine Einrichtung zum Anzeigen des Ladezustands einer Akkumulatorbatterie bekannt. Diese weist eine Meßeinrichtung zum Erfassen der Dichte des Elektrolyten der Batterie auf, wobei eine Dichte eines eingesetzten Sensorkörper-Materials gleich derjenigen Dichte ist, die der Elektrolyt bei einem vorbestimmten Ladezustand der Akkumulatorbatterie aufweist.

Mit der vorliegenden Erfindung wird angestrebt, auf der Grundlage eines erkannten Batteriezustandes ein optimales Sicherheitsverhalten (beispielsweise eine Geschwindigkeitsreduktion) und Verfügbarkeitsverhalten (z. B. "Low-Energy-Modus") eines Kraftfahrzeug-Bordnetzes zur Verfügung zu stellen.

### Vorteile der Erfindung

Diese Aufgabe wird gelöst durch ein Verfahren mit den Merkmalen des Patentanspruchs 1 sowie eine Vorrichtung mit den Merkmalen des Patentanspruchs 7.

Erfindungsgemäß ist, für den Fall, daß ein erkannter Batteriezustand einen bestimmten Schwellwert unterschreitet, vorgesehen, Teilsysteme des Bordnetzes in einen modifizierten Betriebszustand zu überführen, so daß eine Einschränkung der Betriebsfähigkeit des Kraftfahrzeugs für einen Benutzer weitestgehend minimiert ist.

Vorteilhafte Ausgestaltungen des erfindungsgemäßen Verfahrens bzw. der erfindungsgemäßen Vorrichtung sind Gegenstand der Unteransprüche.

Gemäß einer bevorzugten Ausführungsform des erfindungsgemäßen Verfahrens bewirkt ein modifizierter Betriebsmodus eine Reduzierung des Antriebsmoments und/oder der Fahrzeuggeschwindigkeit. Mit dieser Maßnahme sind das Antriebsmoment bzw. die Fahrzeuggeschwindigkeit auf einen Wert reduzierbar, welcher dem Ausfall eines bordnetzabhängigen Steuergeräts, beispielsweise eines EHB-Steuergeräts, entspricht. Diese Maßnahme dient zur Sicherheit des Fahrers durch eine präventive Reduktion der angegebenen Fahrzeugparameter.

Es ist ferner möglich, daß ein modifizierter Betriebsmodus das maximale Antriebsmoment und/oder die maximale Fahrzeuggeschwindigkeit reduziert bzw. begrenzt. Beispielsweise ist über den sogenannten Cartronic-Ansatz lediglich aus der Vorgabe eines maximalen Antriebsmoments über eine entsprechende Motor- und Getriebesteuerung die Einstellung einer Fahrzeugmaximalgeschwindigkeit möglich.

Gemäß einer weiteren bevorzugten Ausführungsform des erfindungsgemäßen Verfahrens bewirkt ein modifizierter Betriebsmodus einen Low-Energy-Modus wenigstens eines Teilsystems des Bordnetzes. Es ist so möglich, unter Inkaufnahme einer Beeinträchtigung der Leistungsfähigkeit eines Teilsystems den Energieverbrauch des Teilsystems abzusenken. Beispielsweise bei einer elektrohydraulischen Bremse (EHB) kann dies durch Absenkung des maximal stellbaren Raddruckes und/oder durch Verzicht auf Individualregelung des Raddrucks der einzelnen Räder einer Achse, insbesondere durch Öffnen der Balanceventile, und/oder durch Verzicht auf Pumpentaktung und/oder durch Verzicht von Bremsdruckaufbau an den Hinterrädern realisiert werden. Für beliebige andere weitere Teilsysteme können entsprechende Low-Energy-Modi mit dem Ziel der Absenkung des Energiebedarfs definiert werden, beispielsweise durch Begrenzung von Stellereingriffen bezüglich Änderungsgeschwindigkeit, -genauigkeit und Wertebereich, den der Steller abdeckt. Als weitere Beispiele seien angegeben das Ausblenden eines Zylinders bei elektronischer Ventilsteuerung am Verbrennungsmotor sowie die Änderung der Lenkübersetzung bei einer elektronischen Lenkung.

Vorteilhafterweise bewirkt ein modifizierter Betriebsmodus eine haptische Rückwirkung wenigstens eines Teilsystems. Durch ein verändertes Systemverhalten wird dem Fahrer beispielsweise signalisiert, daß er seine Fahrweise an den nicht mehr optimalen Batteriezustand anpassen muß. Dies ist beispielsweise durch Erzeugung eines veränderten Pedalgefühls von Brems- und/oder Gaspedal, veränderte Kennlinienbetätigung/-wirkung oder ein verändertes Lenkverhalten, beispielsweise eine schwer gängigere Lenkung, realisierbar. Es ist ebenfalls denkbar, eine künstliche Verschlechterung des Motorstarts durch Motormanagementmaßnahmen vorzusehen, beispielsweise ist es möglich, einen ersten oder auch einen zweiten Zündversuch erfolglos sein zu lassen, und erst beim dritten Versuch eine erfolgreiche Zündung zuzulassen.

Gemäß einer weiteren bevorzugten Ausführungsform des erfindungsgemäßen Verfahrens bewirkt ein modifizierter Betriebsmodus eine Warnung eines Fahrers Fahrzeugführers vor einem drohenden Ausfall einzelner Teilsysteme und/oder eine Empfehlung für einen rechtzeitigen Batterietausch. Die Warnung des Fahrzeugführers, beispielsweise wegen einer bevorstehenden Abschaltung eines Teilsystems aufgrund einer unzureichenden Spannungsversorgung, kann durch geeignete optische oder akustische Maßnahmen bewirkt werden. Die Empfehlung für einen rechtzeitigen Batterietausch, beispielsweise falls die Batteriezustandserkennung eine Zunahme des Batterieinnenwiderstandes über einen zu applizierenden Wert anzeigt oder erkennt, kann vorzugsweise optisch auf dem Armaturenbrett angezeigt werden. Eine Batteriezustandserkennung kann selbstverständlich auch andere Kenngrößen verwenden, beispielsweise die Feststellung einer Batteriekapazität, welche gegebenenfalls einen vorgegebenen Grenzwert bzw. eine Mindestkapazität nicht mehr erreicht.

Durch die erfindungsgemäße Maßnahme, die Zustandsgröße "Batteriezustand" zu verwerten, vermindern sich für den Fahrzeugführer Nachteile, die bei einer Nichtverfügbarkeit eines intakten Bordnetzes bzw. einem Übergang von einem intakten auf ein nicht intaktes Bordnetz auf ihn zukommen würden.

### Zeichnung

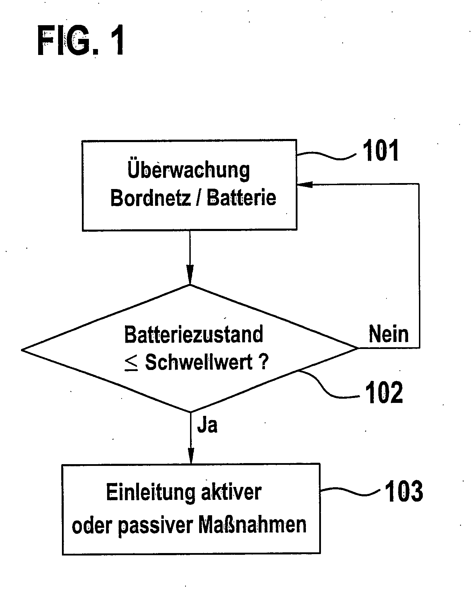

Die Erfindung wird nun weiter anhand der beigefügten Zeichnung erläutert. In dieser zeigt
- Figur 1: ein schematisches Blockschaltbild zur Erläuterung einer bevorzugten Ausführungsform des erfindungsgemäßen Verfahrens.

### Beschreibung bevorzugter Ausführungsformen der Erfindung

Der grundsätzliche Ablauf des erfindungsgemäßen Verfahrens wird nun anhand eines bevorzugten Ausführungsbeispiels, welches in Fig. 1 schematisch dargestellt'ist, erläutert.

In einem Schritt 101 erfolgt eine Überwachung des Bordnetzes und/oder der Batterie des Kraftfahrzeugs, wobei über eine Feststellung des Batteriezustands auch eine Überwachung des Bordnetzes insgesamt durchgeführt werden kann. Die Überwachung des Batteriezustands ist zweckmäßigerweise über eine Feststellung der Batterieladung (bzw. in analoger Weise einer entsprechenden Batterieentladung) durchführbar. Der Batterieladezustand kann direkt an der Batterie, beispielsweise durch Messung der dem Ladezustand proportionalen Ruhespannung im Fall einer unbelasteten Batterie und Integralbildung des Batteriestroms im Fahrzeugbetrieb ermittelt werden. Die Batterieleistungsfähigkeit kann dann aus dem Ladezustand und alterungsabhängigen Größen wie z. B. Batterieinnenwiderstand und Batteriekapazität, eventuell unter Berücksichtigung weiterer Faktoren, ermittelt werden. Es ist jedoch ebenfalls denkbar, Signale, welche von mit der Batterie in Wirkverbindung stehenden Elementen des Bordnetzes erzeugt werden, auszuwerten, um so Rückschlüsse auf den Batteriezustand zu ziehen. Weist beispielsweise ein von einem derartigen Element des Bordnetzes erzeugtes Signal eine bestimmte Form auf, kann dies beispielsweise darauf zurückzuführen sein, daß eine Verschlechterung des Zustandes einer das Bordnetz mit Energie beaufschlagenden Batterie eingetreten ist. Das hier dargestellte Ausführungsbeispiel geht der Einfachheit halber davon aus, daß eine direkte Erkennung des Zustandes der Batterie (beispielsweise Unterschreiten eines vordefinierbaren Ladezustands) durchgeführt wird.

Für den Fall, daß ein entsprechender Batteriezustands-Schwellwert unterschritten wird (Schritt 102) sendet ein (nicht dargestelltes) Bordnetzsteuergerät ein oder mehrere Steuersignale an weitere Steuergeräte des Bordnetzes, beispielsweise die Steuergeräte einer Antriebsmomentenregelung, einer elektrohydraulischen Bremse (EHB) oder eines elektrischen Lenksystems (EAS), wobei diese Signalübertragung vorzugsweise über einen CAN-Bus erfolgt. Ansprechend auf die Steuersignale ist es möglich, die Teilsysteme in jeweils modifizierte Betriebszustände zu überführen, wie weiter unten im einzelnen erläutert wird. Wird hingegen in dem Schritt 102 festgestellt, daß der Batteriezustand den Schwellwert nicht unterschritten hat, erfolgt eine Rückverzweigung zu Schritt 101. Die Häufigkeit bzw. Frequenz der Durchführung der Schritte 101 bzw. 102 hängt von konkreten Gegebenheiten bzw. Anforderungen ab, und soll hier nicht näher erläutert werden.

Für den Fall, daß der Batteriezustand bzw. Ladezustand als unter dem vorbestimmten Schwellwert liegend erkannt wird, werden in einem Schritt 103 aktive und/oder passive Maßnahmen zur Unterstützung bzw. unter den konkreten Gegebenheiten optimalen Sicherung des Fahrzeugbetriebes eingeleitet.

Als passive Maßnahme kommt insbesondere in Frage die Warnung des Fahrzeugführers vor einem drohenden Ausfall einzelner Teilsysteme des Bordnetzes wegen Abschaltung durch eine nicht ausreichende Spannungsversorgung durch die Batterie. Diese Warnung kann durch geeignete optische oder akustische Maßnahmen erfolgen. Es ist als weitere passive Maßnahme ebenfalls möglich, dem Fahrzeugführer eine Empfehlung für einen rechtzeitigen Batterieaustausch zur Verfügung zu stellen, falls die Batteriezustandserkennung das Unterschreiten eines Schwellwerts, z. B. aufgrund einer Zunahme des Batterieinnenwiderstands anzeigt oder erkennt. Hier bietet sich insbesondere eine optische Anzeige einer derartigen Empfehlung am Armaturenbrett an.

Als aktive Maßnahme bei Erkennen eines für die volle Funktionsfähigkeit des Fahrzeugs nicht mehr ausreichenden Batteriezustands kommt eine Reduzierung des Antriebsmomentes zur Begrenzung der Fahrzeugmaximalgeschwindigkeit in Frage. Eine derartige Begrenzung erfolgt beispielsweise mittels des Cartronic-Ansatzes lediglich über die Vorgabe eines Antriebsmomentes, welches Motor- und Getriebesteuergerät gemeinsam zur Begrenzung der Fahrzeugmaximalgeschwindigkeit umsetzen können. Hierdurch wird gewährleistet, daß auch eine eventuell eingeschränkte Funktionsfähigkeit beispielsweise des elektrohydraulischen Bremssystems oder der Lenkunterstützung die notwendigen Sicherheitskriterien erfüllt.

Es ist ferner denkbar, eine Reduzierung eines (aktuellen) Antriebsmomentes zur Reduzierung der (aktuellen) Fahrzeuggeschwindigkeit auf einen Wert, der dem Ausfall eines bordnetzabhängigen Steuergerätes entspricht, durchzuführen.

Durch eine derartige Maßnahme kann beispielsweise gewährleistet werden, daß eine aktuelle Fahrzeuggeschwindigkeit an eine aufgrund des Batteriezustandes reduzierte Funktionsfähigkeit des Fahrzeugs angeglichen wird.

Es ist ferner denkbar, die einzelnen Teilsysteme des Fahrzeugbordnetzes jeweils in einen Low-Energy-Modus zu schalten, wobei auch hier insbesondere an die erwähnten EAS- und EHB-Systeme gedacht ist. Unter Beeinträchtigung der Leistungsfähigkeit der Teilsysteme wird der Energieverbrauch der Teilsysteme (beispielsweise EAS, EHB, Motor-Steuergerät) abgesenkt. Bei einem EHB-System kann dies z.B. durch Absenkung des maximal stellbaren Raddrucks, durch Verzicht auf Individualregelung des Raddruckes der einzelnen Räder einer Achse durch Öffnen der Balanceventile, durch Verzicht auf Pumpentaktung oder durch Verzicht auf Bremsdruckaufbau an den Hinterrädern erfolgen. Für beliebige andere Teilsysteme kann ein entsprechender Low-Energy-Modus definiert werden, mittels dessen eine Begrenzung des Energiebedarfes einzelner Teilsysteme erreicht werden kann, um die Grundfunktionen, wie z. B. Motorantrieb, Getriebeübersetzung, Licht, Bremsfähigkeit, Lenkfähigkeit, usw. sicherzustellen.

Es ist ebenfalls an haptische Rückwirkungen der einzelnen Teilsysteme zu denken: Beispielsweise wird durch verändertes Systemverhalten dem Fahrer signalisiert, daß er seine Fahrweise an den Batteriezustand anpassen muß. Z.B. ist die Veränderung eines Pedalgefühls von Brems- oder Gaspedal (veränderte Kennlinie Betätigung/Wirkung) oder ein verändertes Lenkverhalten (z.B. schwergängigere Lenkung) realisierbar. Es ist ebenfalls möglich, eine künstliche Verschlechterung des Motorstarts durch Motormanagementmaßnahmen vorzusehen.

## Patentansprüche

1. Verfahren zum Betreiben eines elektrischen Teilsystemes, insbesondere ein elektrohydraulisches Bremssystem oder ein elektrisches Lenksystem oder eine Motor- bzw. Getriebesteuerung oder eine Antriebsmomentenregelung oder ein Warn- bzw. Anzeigesystem, aufweisenden Bordnetzes eines Kraftfahrzeugs, **gekennzeichnet durch** folgende Schritte:
- Feststellung des Zustands eines dem Bordnetz zuordnenbaren Energiespeichers, insbesondere einer Batterie,
- für den Fall, daß der festgestellte Zustand des Energiespeichers einen voreinstellbaren Grenzwert unterschreitet, Beaufschlagung wenigstens eines Teilsystems mit einem Steuersignal, ansprechend auf welches das wenigstens eine Teilsystem in einen modifizierten Betriebsmodus überführt wird.

2. Verfahren nach Anspruch 1, **dadurch gekennzeichnet, daß** ein modifizierter Betriebsmodus einer Motor- bzw. Getriebesteuerung eine Reduzierung eines Fahrzeugantriebsmomentes und/oder der Fahrzeuggeschwindigkeit bewirkt.

3. Verfahren nach einem der Ansprüche 1 oder 2, **dadurch gekennzeichnet, daß** ein modifizierter Betriebsmodus der Motor- bzw. Getriebesteuerung eine Reduzierung bzw. Beschränkung eines maximalen Fahrzeug-Antriebsmomentes und/oder einer maximalen Fahrzeuggeschwindigkeit bewirkt.

4. Verfahren nach einem der vorstehenden Ansprüche, **dadurch gekennzeichnet, daß** ein modifizierter Betriebsmodus einen Low-Energy-Modus wenigstens eines Teilsystems bewirkt.

5. Verfahren nach einem der vorstehenden Ansprüche, **dadurch gekennzeichnet, daß** ein modifizierter Betriebsmodus eine haptische Rückwirkung wenigstens eines Teilsystems bewirkt.

6. Verfahren nach einem der vorstehenden Ansprüche, **dadurch gekennzeichnet, daß** ein modifizierter Betriebsmodus eine Warnung eines drohenden Ausfalls und/oder eine Empfehlung für einen Batterietausch für den Fahrzeugbenutzer bewirkt.

7. Vorrichtung zum Betreiben eines Teilsysteme, insbesondere ein elektrohydraulisches Bremssystem oder ein elektrisches Lenksystem oder eine Motor- bzw. Getriebesteuerung oder eine Antriebsmomentenregelung oder ein Warn- bzw. Anzeigesystem, aufweisenden Bordnetzes eines Kraftfahrzeugs, **gekennzeichnet durch**
- Mittel zur Feststellung des Zustandes eines dem Bordnetz zuordnenbaren Energiespeichers, insbesondere einer Batterie,
- Mittel zur Beaufschlagung wenigstens eines der Teilsysteme mit einem den Zustand des Energiespeichers darstellenden Steuersignal, ansprechend auf welches das wenigstens eine Teilsystem für den Fall, daß der festgestellte Zustand des Energiespeichers einen voreinstellbaren Grenzwert unterschreitet, in einen modifizierten Betriebszustand überführt wird.

8. Vorrichtung nach Anspruch 7, **gekennzeichnet durch** ein ein Signal bzw. eine Information bezüglich des Zustandes des Energiespeichers erhaltendes und/oder generierendes Bordnetzsteuergerät, welches Steuersignale an den jeweiligen Teilsystemen zugeordnete Steuergeräte sendet.
